# EUROPEAN PATENT APPLICATION

(11) **EP 4 082 837 A1**
(43) Date of publication of application: **02.11.2022**
(21) Application number: 20906301.5
(22) Date of filing: 30.10.2020
(51) Int. Cl.: B60R 9/055

(54) **ROOF BOX**

(30) Priority: 25.12.2019 JP 2019235057
(71) Applicant: Car Mate Mfg.co., Ltd., Tokyo 171-0051 (JP)
(72) Inventor: AONO Tatsuyuki, Tokyo 171-0051 (JP); NAKAMURA Hisashi, Tokyo 171-0051 (JP); YAMAGUCHI Hiroshi, Tokyo 171-0051 (JP)
(74) Representative: Lambacher, Michael
(86) International application number: PCT/JP2020/040857
(87) International publication number: WO 2021/131323

(57) **Abstract**

[Problem] Provided is a roof box that allows storing a long object while providing advantages in storage and transportation of the roof box itself.

[Solution] A roof box includes a pair of end units 12 (12a, 12b) and at least one spacer unit 30. The pair of end units 12 (12a, 12b) and the at least one spacer unit 30 constitute a block structure. The end unit 12 and the spacer unit 30 each include a body 14, 32 and a cover 16, 34 connected by a hinge mechanism 18, 36, respectively. A securing position in a longitudinal direction of the end unit 12 to the spacer unit 30 is changeable, or the spacer unit 30 is changeable to a unit having a different longitudinal length.

## Description

### TECHNICAL FIELD

The present invention relates to a roof box for vehicle, and especially relates to a roof box appropriate for storing a long object.

### BACKGROUND ART

There is a need for mounting a roof box on a roof of a vehicle for efficient use of an in-vehicle space and for carrying luggage that cannot be stored inside the vehicle. While general size luggage can be stored in the roof box, it is difficult to store a long object, such as a fishing rod, in a normal size roof box in a state of use, and a labor of dividing or expanding/contracting in each traveling and performing a readjustment on site has been forced.

As a roof box, while a type allowing to increase a storage capacity by increasing a height between a body and a cover as disclosed in Patent Document 1 has been proposed, one that can efficiently store a long object has not been proposed.

For a normal roof box, while a fishing rod dedicated case defining a housing space, as disclosed in Patent Document 2, has been proposed with an anxiety of a secured state of a long object, a fishing rod that can be stored in this case is premised to be allowed to be stored in a normal roof box.

Therefore, a way of carrying a long fishing rod in a state of being stood in a cylindrical holder attached to a hitch carrier, or a way of carrying the fishing rod by directly securing it to a roof carrier is often employed. However, since the fishing rod bows, and additionally, devices such as a reel are mounted, a damage caused by, for example, a contact with a vehicle, a scattered material, or the like is concerned, and therefore, a dedicated case allowing directly storing a long object has been desired to be provided.

Patent Document 1: JP-A-2003-89329
Patent Document 2: JP-A-9-172932

### DISCLOSURE OF THE INVENTION

### PROBLEMS TO BE SOLVED BY THE INVENTION

To simply meet the above-described desire, it is considered to be only necessary to produce a roof box having a size enough to store a long object. However, the roof box is large even in the normal size, therefore, for one having a length enough to store a long object such as a fishing rod, there is a concern about storage when not in use, and it is possibly difficult to transport it by a general transportation service when it is provided as a product.

Therefore, it is an object of the present invention to provide a roof box that allows storing a long object while providing advantages in storage and transportation of the roof box itself.

### SOLUTIONS TO THE PROBLEMS

To achieve the above-described object, a roof box according to the present invention includes a pair of end units and at least one spacer unit. The pair of end units and the at least one spacer unit constitute a block structure. The end units and the spacer unit each include a body and a cover. A securing position in a longitudinal direction of the end unit to the spacer unit is changeable, or the spacer unit is changeable to a unit having a different longitudinal length.

In the roof box as described above, an overlapping portion may be disposed to a connecting portion between the end unit and the spacer unit, and a drainage groove may be provided along a width direction to the cover of the unit in a lower side of the overlapping. Accordingly, water entering inside the roof box can be avoided without disposing an additional component.

In the roof box as described above, the body may be provided with a reinforcement frame disposed across a plurality of the units in the longitudinal direction. Accordingly, even when the body is configured of a material having an excellent workability and a low rigidity, the rigidity as the whole roof box can be obtained.

In the roof box as described above, at least one of the body and the cover may be provided with a reinforcement piece that connects at least a part of a pair of sidewalls disposed along the longitudinal direction. Accordingly, expanded deformation in the width direction of the sidewalls constituting the cover and the body constituting the roof box can be avoided.

Furthermore, in the roof box as described above, the pair of end units are preferably configured to be linearly symmetrical having connection-side end portions as base points. Accordingly, the form can be the same regardless of which end unit is disposed in a front side of a vehicle. This provides a degree of freedom in mounting to the vehicle, thus allowing to select a right open type or a left open type of the cover as necessary.

### EFFECTS OF THE INVENTION

The roof box as described above allows storing a long object while providing advantages in storage and transportation of the roof box itself.

### BRIEF DESCRIPTION OF THE DRAWINGS

Fig. 1 is a perspective view illustrating a configuration of a roof box according to a first embodiment.
Fig. 2 is a front view illustrating the configuration of the roof box according to the first embodiment.
Fig. 3 is a front view illustrating a configuration of an end unit constituting the roof box according to the embodiment.
Fig. 4 is a bottom view illustrating the configuration of the end unit constituting the roof box according to the embodiment.
Fig. 5 is a right side view illustrating the configuration of the end unit constituting the roof box according to the embodiment.
Fig. 6 is a block diagram for describing a configuration feature of a body constituting the end unit.
Fig. 7 is a block diagram for describing a modification of the configuration feature of the body constituting the end unit.
Fig. 8 is a bottom view illustrating a configuration of a spacer unit constituting the roof box according to the embodiment.
Fig. 9 is a front view illustrating the configuration of the spacer unit constituting the roof box according to the embodiment.
Fig. 10 is a right side view illustrating the configuration of the spacer unit constituting the roof box according to the embodiment.
Fig. 11 is a perspective view for describing a connecting portion between the end unit and the spacer unit in detail.
Fig. 12 is a perspective view illustrating a state where only one of a pair of the end units is extended (state where an overlapping region of the one end unit is decreased).
Fig. 13 is a perspective view illustrating a state where both of the pair of end units are extended (state where overlapping regions of both of the pair of end units are decreased).
Fig. 14 is a perspective view illustrating a state where the pair of end units and the spacer unit are separated and stacked in a height direction.
Fig. 15 is a perspective view illustrating a state where the roof box in the state illustrated in Fig. 14 is put in a package box.
Fig. 16 is a perspective view for describing a configuration of a roof box according to a second embodiment.

### DESCRIPTION OF PREFERRED EMBODIMENTS

The following describes embodiments according to a roof box of the present invention in detail with reference to the drawings. The embodiments described below are parts of the preferred configurations in performing the present invention, and even when the appearance shape or the configuration is partially changed, they can be considered to be a part of the present invention insofar as the effect of the present invention is provided.

### [First Embodiment]

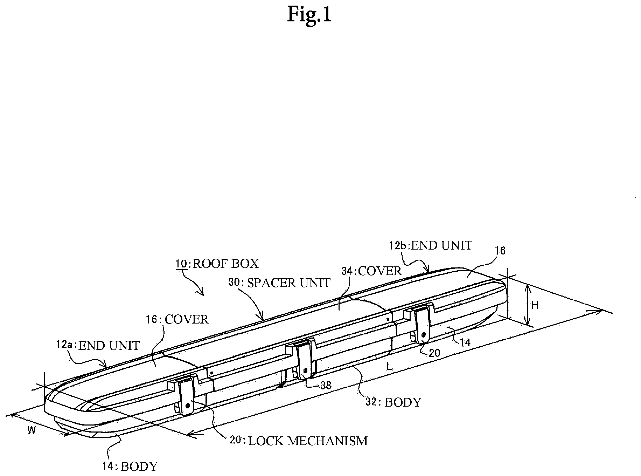

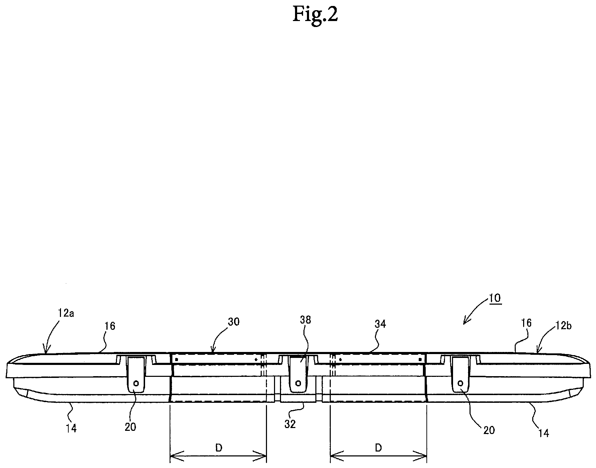

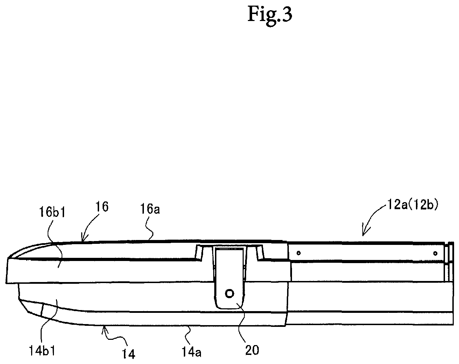

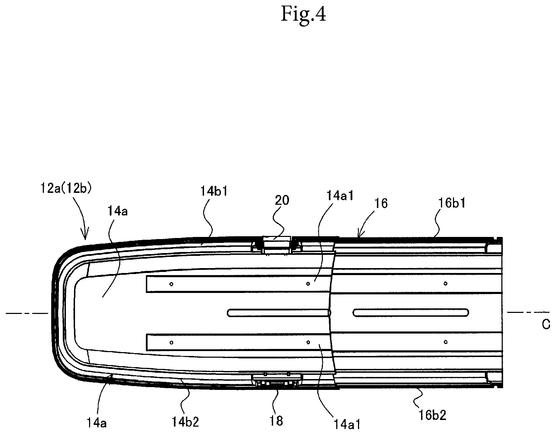

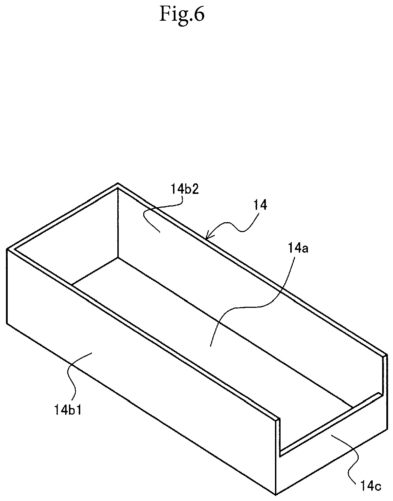

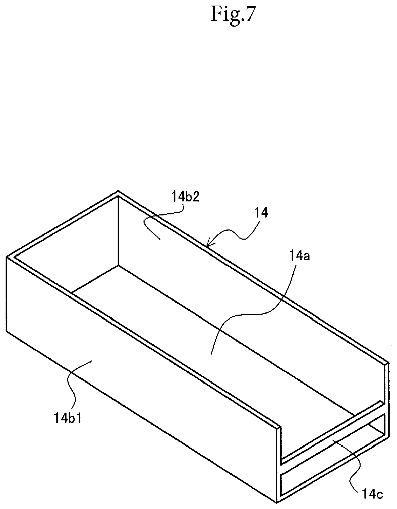

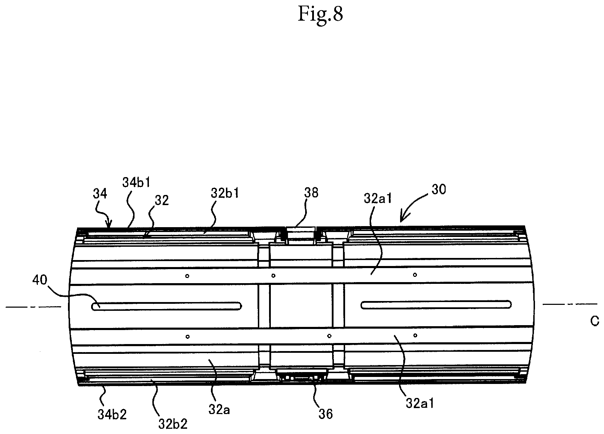

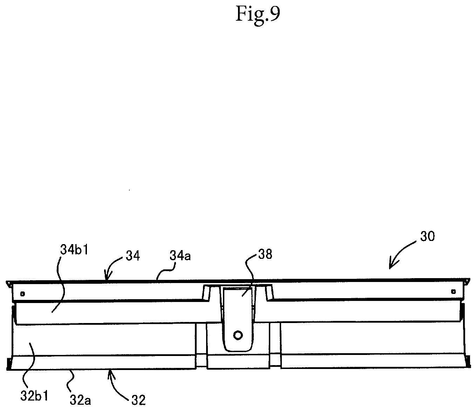

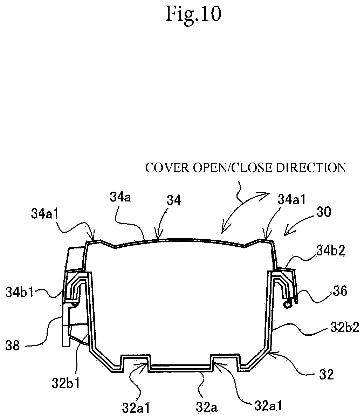

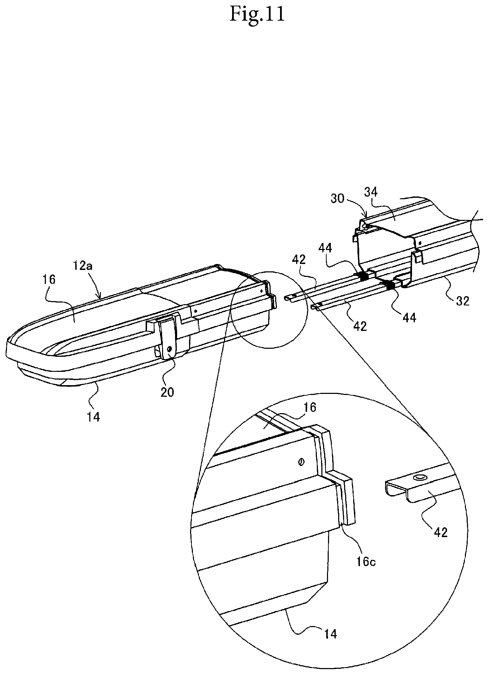

First, with reference to Fig. 1 to Fig. 11, a roof box 10 according to the first embodiment will be described. In the drawings, Fig. 1 is a perspective view illustrating a configuration of the roof box according to the first embodiment, and Fig. 2 is a front view illustrating the configuration of the roof box according to the first embodiment. Fig. 3 to Fig. 5 are three views illustrating a configuration of an end unit (left side), and are a front view, a bottom view, and a right side view, respectively. Fig. 6 and Fig. 7 are perspective views schematically illustrating a configuration of a body constituting the end unit. Fig. 8 to Fig. 10 are perspective views illustrating a configuration of a spacer unit, and are a bottom view, a front view, and a right side view, respectively. Fig. 11 is a perspective view for describing a connecting portion between the end unit and the spacer unit in detail.

The roof box 10 according to the embodiment has a block structure including a pair of end units 12 (12a, 12b) and a spacer unit 30. Then, the pair of end units 12 are connected to respective both ends of the spacer unit 30, thereby constituting one roof box 10. In the following description, first, basic structures of the end unit 12 and the spacer unit 30 are described, and subsequently, the structure of the roof box 10 is described in detail.

### [End Unit]

The end units 12 (12a, 12b) each include a body 14 for storing luggage and a cover 16 that covers an opening portion of the body 14. The body 14 is formed in a depressed shape with a bottom plate 14a and sidewalls 14b1, 14b2, the cover 16 is formed in a depressed shape with a top panel 16a and sidewalls 16b1, 16b2, and depressed portions of the body 14 and the cover 16 are opposed to form a container shape. The body 14 and the cover 16 are connected by a hinge mechanism 18. The hinge mechanism 18 is disposed at the sidewalls in one side (in this embodiment, sidewalls 14b2, 16b2) among the sidewalls 14b1, 14b2, 16b1, 16b2 along a longitudinal direction, and the cover 16 is configured to be opened and closed with respect to the body 14 having the hinge mechanism 18 as a base point. A lock mechanism 20 is disposed at the sidewalls 14b1, 16b1 opposed to the sidewalls 14b2, 16b2 at which the hinge mechanism 18 is disposed, and is configured to restrict opening of the cover 16.

The pair of end units 12a, 12b are configured to be linearly symmetrical having connection-side end portions as base points. With this configuration, when connected to the spacer unit 30 described later in detail, open/close directions of the covers 16 can be matched. Since the similar configuration is provided regardless of which of the end units 12a and 12b is disposed in the front side, the degree of freedom can be given to a mounting direction to a vehicle roof (not illustrated).

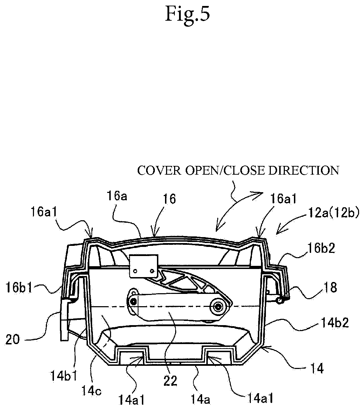

The end unit 12 according to the embodiment is configured to include a reinforcement piece 14c at the connection-side end portion of the body 14. The reinforcement piece 14c is a member that connects between the pair of sidewalls 14b1, 14b2 disposed along the longitudinal direction, and constitutes a wall surface as illustrated in a schematic perspective view of Fig. 6 in the configuration illustrated in Fig. 5 (indicated by a two-dot chain line). By disposing the reinforcement piece 14c, the connection-side end portion of the body 14 can be avoided from expanding in a width direction, thus allowing attempting to maintain the shape and improve the strength. As the role of the reinforcement piece 14c, it is only necessary to avoid the expansion of the sidewalls 14b1, 14b2 in the width direction at the connection-side end portion, and therefore, its shape does not need to be a wall surface shape. That is, it may have a configuration of a beam shape connecting between at least a part of the pair of sidewalls 14b1, 14b2 (see Fig. 7). With the configuration including the reinforcement piece 14c, the shape as the body 14 can be maintained even for a material easy to be molded or a relatively thin material having a low rigidity. Accordingly, even when the whole roof box 10 is large-sized, it can be low-price and lightweight.

In the cover 16, mountain fold shapes (what is called an angular wave 16a1), which each have a cross-sectional shape in the width direction in a trapezoidal shape, are formed in boundaries between the top panel 16a and the sidewalls 16b1, 16b2 along the longitudinal direction. With this configuration, the strength in the longitudinal direction can be enhanced, and a twist that occurs when opening the cover can be suppressed. The cover 16 is formed such that the top panel 16a positioned between the angular waves 16a1 formed along the longitudinal direction at both ends of the top panel 16a rises in a semi-cylindrical shape (protruding shape). With this configuration, the strength in a pressing direction can be enhanced while having an approximately flat appearance.

The end unit 12 according to the embodiment is configured to include open/close control means 22 at an end portion (distal-end-side end portion) positioned in the opposite side of the connection-side end portion. The open/close control means 22 is means that controls the open state of the cover 16 to the body 14, and can avoid that a load of the cover 16 is applied to only the sidewall 14b2 in the side in which the hinge mechanism 18 is disposed. Accordingly, the deformation of the body 14 when the cover 16 is opened can be avoided. The bottom plate 14a constituting the body 14 is provided with a slit 24 for mounting a metal fitting (not illustrated) for securing the roof box 10 to a carrier bar (not illustrated).

### [Spacer Unit]

The spacer unit 30 basically includes a body 32 and a cover 34 similarly to the end unit 12. Then, a hinge mechanism 36 is disposed to one of sidewalls 32b1 and 32b2, and 34b1 and 34b2 (in this embodiment, sidewalls 32b2, 34b2) disposed along the longitudinal direction of the body 32 and the cover 34, and a lock mechanism 38 is disposed to the other sidewalls (in this embodiment, sidewalls 32b1, 34b1). This allows restricting the opening/closing and the releasing of the cover 34 to the body 32.

The spacer unit 30 according to the embodiment has both end portions in the longitudinal direction as connection end portions, and the end portions are both opened. Therefore, the body 32 and the cover 34 form a cylindrical body in the state of mutually fitted.

The configuration features of the body 32 and the cover 34 are similar to those of the above-described end unit 12. That is, the body 32 is formed in a depressed shape by a bottom plate 32a and the sidewalls 32b1, 32b2, and the cover 34 is formed in a depressed shape by a top panel 34a and the sidewalls 34b1, 34b2. Then, angular waves 34a1 are formed between the top panel 34a and the respective sidewalls 34b1, 34b2 in the cover 34. The spacer unit 30 according to the embodiment is formed to have the shape of the connection end portion similar or approximate to the connection-side end portion of the end unit 12. This is because to allow assembling them to one another. Furthermore, the bottom plate of the body 32 is provided with a slit 40.

### [Roof Box]

The roof box 10 according to the embodiment is configured by assembling the pair of end units 12 having the above-described basic configuration and the spacer unit 30. Specifically, overlapping regions D are provided to each of the connection-side end portions of the end unit 12 and the connection end portions of the spacer unit 30, and the ranges are configured to be changeable. With this configuration, the length in the longitudinal direction of the roof box 10 can be changed.

The roof box 10 according to the embodiment has a configuration in which the outside of the connection-side end portion of the end unit 12 is covered with the spacer unit 30. Then, the overlapping region D of the end unit 12 is configured to be positioned inside by the thickness of the constituent material compared with the other region. With this configuration, in a state where the end unit 12 is maximally entered into the spacer unit 30, that is, a state where the roof box 10 is maximally shortened, a state where there is almost no level difference between the outer surface of the end unit 12 and the outer surface of the spacer unit 30 can be provided. Accordingly, a fine appearance can be provided, and an aerodynamically advantageous effect can be obtained.

In the roof box 10 according to the embodiment, a drainage groove 16c is provided to the connection-side end portion of the cover 16 of the end unit 12 disposed inside the spacer unit 30. The drainage groove 16c only needs to be a depressed portion provided along the width direction of the cover 16, and it is only necessary to provide at least one groove at the proximity of the end portion of the cover 16. This is because to avoid water entering inside the roof box 10 having the block structure. While a water stop packing or the like may be disposed, providing the drainage groove 16c eliminates the need for disposing an additional component, thus allowing to attempt the improvement of productivity and the reduction of production cost. Obviously, a water stop packing or the like may be disposed as necessary.

The roof box 10 according to the embodiment includes frame guides 14a1, 32a1 disposed to the bottom plates 14a, 32a of the bodies 14, 32 respectively constituting the end unit 12 and the spacer unit 30. The frame guides 14a1, 32a1 are depressed grooves provided along the longitudinal direction to the bottom plate 14a of the body 14 of the end unit 12 and the bottom plate 32a of the body 32 of the spacer unit 30, respectively, and components for disposing reinforcement frames 42 to complement rigidities of the bodies 14, 32 in the longitudinal direction. Therefore, the frame guides 14a1, 32a1 are disposed so as to be continuous when the end unit 12 and the spacer unit 30 are mutually assembled. In the case of the roof box 10 according to the embodiment, the two frame guides 14a1, 32a1 are disposed in line symmetry with respect to a center line C in the width direction.

The reinforcement frame 42 is a component for complementing the rigidities of the bodies 14, 32. While its shape or material is not limited insofar as the rigidity to bending is high and the weight is light, for example, an aluminum material having a U-shaped cross-sectional surface as illustrated in Fig. 11 or a rectangular hollow cross-sectional surface (not illustrated) may be used. While the reinforcement frame 42 does not need to be one long object, but may have a divided structure, in this case, dividing positions of the reinforcement frames 42 disposed to the two frame guides 14a1, 32a1 arranged in line symmetry with respect to the center line C are preferred not to be positioned on the same line along the width direction. This is because to avoid generating a part in which the rigidity of the reinforcement frame 42 does not work.

For convenience of the assembly, the frame guide 14a1 disposed in the overlapping region D of the end unit 12 has a deep depth and a wide width compared with the frame guides 14a1, 32a1 formed in the other portions. Therefore, the frame guide 14a1 in the deep depth and wide width part is provided with a spacer 44 between the reinforcement frame 42 and the frame guide 14a1. With this configuration, it can be avoided that the reinforcement frame 42 separates from the bottom plate 14a of the body 14.

In the roof box 10 configured as described above, positioning and securing of the end unit 12 and the spacer unit 30 when assembling them only need to be performed by general tightening means. Specifically, bolt/nut, a quick fastener, a plastic rivet, and the like are included.

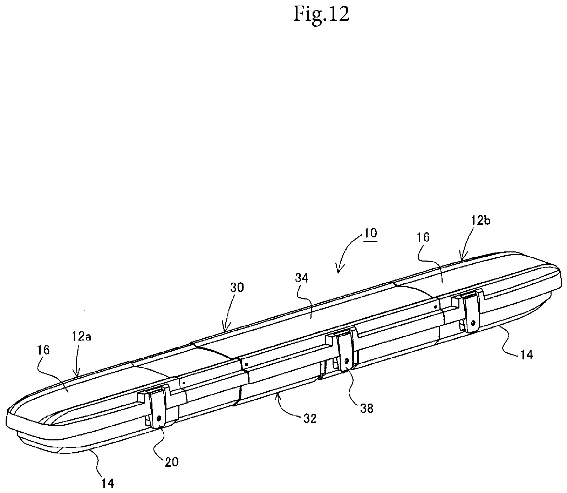

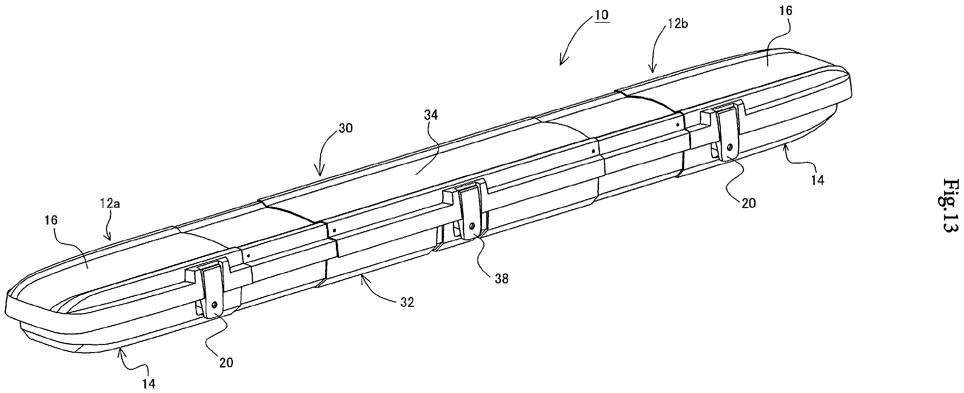

Among the drawings, Fig. 12 is a perspective view illustrating the configuration of the roof box 10 in a state where only one end unit 12a of the pair of the end units 12 is extended. Fig. 13 is a perspective view illustrating a state where both of the pair of end units 12 are extended (state where the overlapping regions D are narrowed).

### [Action and Effect]

The roof box 10 configured as described above is configured to be expandable and contractible as the whole roof box 10 while having the block structure by the end unit 12 and the spacer unit 30. Therefore, by decreasing the overlapping region D between the end unit 12 and the spacer unit 30 to lengthen the whole length of the roof box 10 (for example, configuration illustrated in Fig. 13), a long object can be stored. When the overlapping region D is increased to shorten the whole length of the roof box 10 (for example, configuration illustrated in Fig. 1), the roof box 10 itself is easily stored and transported. Furthermore, with the block structure in which the end unit 12 and the spacer unit 30 are dividable, the storage or the packing size of the roof box 10 itself can be further downsized. Accordingly, when providing the roof box 10 as a product, the transportation by a general transportation service is easily allowed.

Specifically, since the roof box 10 according to the embodiment is configured on the premise of storing a long object, the whole length (longitudinal length L) reaches L = 2400 mm even in the shortest state (state where the overlapping region D is increased to the maximum) (see Fig. 1). Then, a width W and a height H are assumed to become W = 340 mm, H = 170 mm, respectively.

However, currently, the dimensions do not allow the transportation as a luggage by the general transportation service. Therefore, as an example of the range that allows handling as an ordinary luggage in the general transportation service, this application focuses on the block structure having 1700 mm or less as a longest dimension of one side and 2000 mm or less as a total dimension of three sides (length L, width W, height H) as an index.

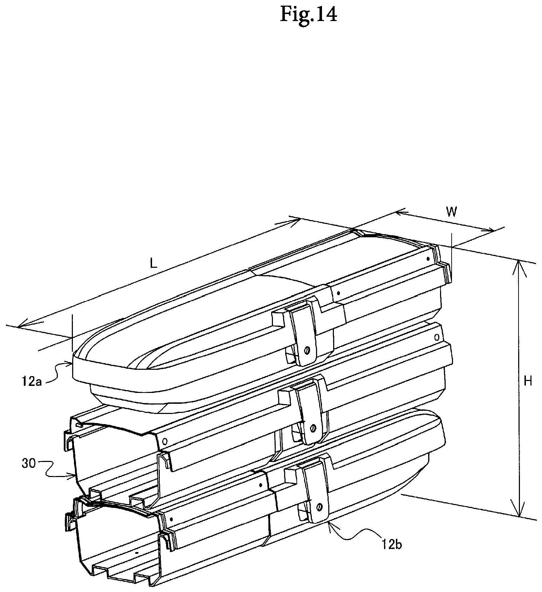

Consequently, as illustrated in Fig. 14, by separating the end units 12 from the spacer unit 30 and stacking them in the height direction, the longest dimension (length dimension) L = 1040 mm, the width dimension W = 340 mm, and the height dimension H = 510 mm (total dimension of three sides: 1890 mm) can be achieved.

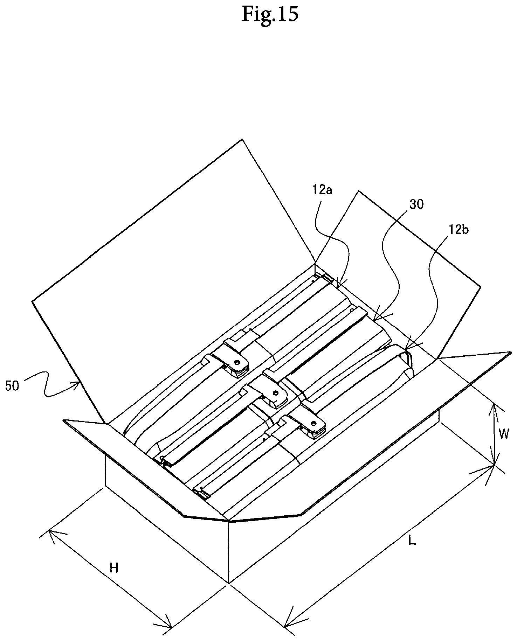

While the luggage is packed for the transportation, even in this case, a packing as illustrated in Fig. 15 allows storing in a box 50 (for example, cardboard box) having outside dimensions of (L) 1065 mm x (W) 385 mm x (H) 550 mm (total dimension of three sides: 2000 mm), thus allowing to clear the index described above. Accordingly, as described above, it can be said that when providing the roof box 10 as a product, the transportation by a general transportation service is easily allowed.

Even when the main dimension (in this embodiment, longitudinal direction: 2400 mm at the shortest) is ensured, by reducing the dimensions of the other sides (width W and height H), even a further tight dimensional index can be obviously cleared.

By the block structure of the roof box 10 including the end unit 12 and the spacer unit 30, when a part of the components (for example, spacer unit 30) is deteriorated or damaged, the replacement of only the corresponding part is allowed.

### [Second Embodiment]

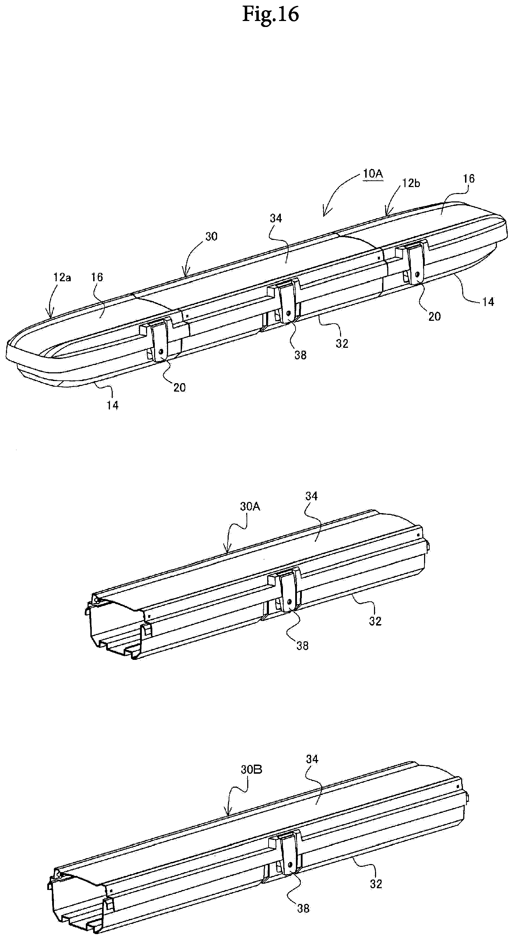

Next, with reference to Fig. 16, a roof box 10A according to the second embodiment will be described. The roof box 10A according to the embodiment has the basic configuration similar to that of the roof box 10 according to the first embodiment, and has a block structure including a pair of end units 12 (12a, 12b) and a spacer unit 30. Accordingly, the same reference numerals are attached to the portions having the same functions, and detailed explanations will be omitted.

The roof box 10A according to the embodiment is different from the roof box 10 according to the first embodiment in that the whole length of the roof box 10A in use can be changed without making the overlapping region D between the end unit 12 and the spacer unit 30 changeable. Specifically, as illustrated in Fig. 16, for the spacer unit 30 disposed between the pair of end units 12a, 12b, a plurality of spacer units 30 different in length in the longitudinal direction are prepared (in the case of the configuration illustrated in Fig. 16, spacer units 30, 30A, 30B). Then, the pair of the end units 12a, 12b are assembled to the spacer unit 30, 30A, or 30B corresponding to the length that the user desires.

### [Action and Effect]

According to the roof box 10A having the feature as described above, when the spacer units (in this embodiment, three types of spacer units 30, 30A, 30B) different in length can be prepared, the longitudinal length of the whole roof box 10A can be changed. Since the need for disposing the slide mechanism is eliminated, a gap at the assembly portion can be decreased, thus allowing to enhance the rigidity. Furthermore, the configuration of the assembly portion can be simplified.

Other configurations, actions, and effects are similar to those of the roof box 10 according to the first embodiment. In the roof box 10A according to the embodiment, the number of the spacer units 30 does not need to be one. That is, the length of the whole roof box may be changed by preparing a plurality of the spacer units 30 having the same shape (same length) and connecting them.

### INDUSTRIAL APPLICABILITY

In the above-described embodiments, the roof boxes 10, 10A that are configured to store a long object and have a relatively narrow width are described. However, obviously, the block structure according to the above-described embodiments is applicable to a roof box having a general width. Accordingly, even the roof box having such a configuration can be considered as a part of the present invention.

In the above-described embodiments, it is described that the reinforcement piece 14c is disposed to the body 14 constituting the end unit 12, and the reinforcement frames 42 are disposed to the bottom plates 14a, 32a of the bodies 14, 32. However, when the sufficient strength can be provided by the materials constituting the bodies 14, 32 and the covers 16, 34 without disposing the reinforcement piece 14c or the reinforcement frame 42, it is not necessary to employ these reinforcement structures.

### DESCRIPTION OF REFERENCE SIGNS

- 10, 10A: Roof box
- 12 (12a, 12b): End unit
- 14: Body
- 14a: Bottom plate
- 14a1: Frame guide
- 14b1, 14b2: Sidewall
- 14c: Reinforcement piece
- 16: Cover
- 16a: Top panel
- 16a1: Angular wave
- 16b1, 16b2: Sidewall
- 16c: Drainage groove
- 18: Hinge mechanism
- 20: Lock mechanism
- 22: Open/close control means
- 24: Slit
- 30: Spacer unit
- 32: Body
- 32a: Bottom plate
- 32a1: Frame guide
- 32b1, 32b2: Sidewall
- 34: Cover
- 34b1, 34b2: Sidewall
- 36: Hinge mechanism
- 38: Lock mechanism
- 40: Slit
- 42: Reinforcement frame
- 44: Spacer
- 50: Box

## Claims

1. A roof box comprising:
a pair of end units; and
at least one spacer unit, wherein
the pair of end units and the at least one spacer unit constitute a block structure,
the end units and the spacer unit each include a body and a cover, and
a securing position in a longitudinal direction of the end unit to the spacer unit is changeable, or the spacer unit is changeable to a unit having a different longitudinal length.

2. The roof box according to claim 1, wherein
an overlapping portion is disposed to a connecting portion between the end unit and the spacer unit, and
a drainage groove is provided along a width direction to the cover of the unit in a lower side of the overlapping.

3. The roof box according to claim 1 or 2, wherein
the body is provided with a reinforcement frame disposed across a plurality of the units in the longitudinal direction.

4. The roof box according to any one of claims 1 to 3, wherein
at least one of the body and the cover is provided with a reinforcement piece that connects at least a part of a pair of sidewalls disposed along the longitudinal direction.

5. The roof box according to any one of claims 1 to 4, wherein
the pair of end units are configured to be linearly symmetrical having connection-side end portions as base points.
